Europäisches Patentamt

European Patent Office

Office européen des brevets

(19)

(11) Veröffentlichungsnummer: **0 038 430**
**B1**

(12) EUROPÄISCHE PATENTSCHRIFT

(45) Veröffentlichungstag der Patentschrift:
**21.11.84**

(51) Int. Cl.³: **H 04 M 1/05,** H 04 R 1/10

(21) Anmeldenummer: **81102236.7**

(22) Anmeldetag: **25.03.81**

(54) **An einem Schutzhelm zu tragende Hörsprechgarnitur.**

(30) Priorität: **18.04.80 DE 3014918**

(43) Veröffentlichungstag der Anmeldung:
**28.10.81 Patentblatt 81/43**

(45) Bekanntmachung des Hinweises auf die Patenterteilung:
**21.11.84 Patentblatt 84/47**

(84) Benannte Vertragsstaaten:
**AT BE CH DE FR GB IT LI NL SE**

(56) Entgegenhaltungen:
**EP - A - 0 019 838**
**FR - A - 1 110 464**
**FR - A - 1 408 116**
**FR - A - 2 142 600**
**US - A - 3 916 312**

(73) Patentinhaber: **Peiker, Heinrich Andreas,**
**Terracinaweg 5, D-6380 Bad Homburg v.d. Höhe (DE)**

(72) Erfinder: **Peiker, Heinrich Albert, verstorben, (DE)**

(74) Vertreter: **Keller, Hartmut et al, Hartmut Keller Dr. René**
**Keller Postfach 12, CH-3000 Bern 7 (CH)**

BUNDESDRUCKEREI BERLIN

**Beschreibung**

Die Erfindung bezieht sich auf eine an einem Schutzhelm zu tragende Hörsprechgarnitur, insbesondere für Feuerwehrleute, zum Gebrauch ohne oder mit Atemschutzgerät und mit oder ohne Schutzanzug (Vollschutzkleidung).

Bei einer solchen, bekannten Hörsprechgarnitur nach dem Oberbegriff des Anspruchs 1 ist das Wandlergehäuse fest mit dem Anschlußkabel der Garnitur verbunden und durch eine Druckknopfverbindung mit dem Helm verbindbar (US-A-3 916 312). Bei hinreichendem Zug am Anschlußkabel wird die ganze Garnitur vom Helm weggerissen, sie hängt dann pendelnd am Kabel, kann an Gegenstände der Umgebung anschlagen und an diesen hängenbleiben und kann, ohne daß man den Helm abnimmt, nicht oder nur zeitraubend und mühsam wieder am Helm angebracht werden.

Hier will die Erfindung Abhilfe schaffen. Die Erfindung, wie sie in den Ansprüchen gekennzeichnet ist, löst die Aufgabe, eine Hörsprechgarnitur der im Oberbegriff des Anspruchs 1 angegebenen Art zu schaffen, die zur Erstellung der Einsatzbereitschaft, insbesondere eines Feuerwehrmanns, auf einfache Weise schnell und dabei betriebssicher anzuschließen ist. Das (wenn keine Vollschutzkleidung getragen wird) an der Außenseite der Kleidung der die Garnitur benutzenden Person verlaufende Anschlußkabel der Garnitur soll nicht nur von Hand schnell gelöst werden können sondern sich bei übermäßigem Zug selbsttätig von der Garnitur lösen, so daß diese nicht vom Helm weggerissen und keinesfalls der Helm mit der Garnitur vom Kopf des Benutzers gezogen wird, wenn die Person mit dem Kabel an einem Hindernis so hängen bleibt, daß die dadurch für diese Person entstandene Gefahr nur durch Lösen der Kabelverbindung beseitigt werden kann.

Die durch die Erfindung erzielten Vorteile bestehen im wesentlichen darin, daß sich die Brechkupplung bei hinreichendem Zug am Anschlußkabel selbsttätig löst, wobei die Garnitur am Helm bleibt und die schräge, hintere Seite des Wandlergehäuses durch Betasten verhältnismäßig leicht und schnell gefunden und die Brechkupplung wieder an ihr Gegenstück gesteckt werden kann, so daß die erwähnten bisherigen Nachteile vermieden werden. Eine an der Kleidung der die Garnitur benutzenden Person anzubringende Sprechtaste kann auch durch eine darüber getragene Feuerwehr-Vollschutzkleidung hindurch betätigt werden, und ihr ohne Vollschutz an der Außenseite der Kleidung verlaufendes Anschlußkabel löst sich ebenfalls bei übermäßigem Zug selbsttätig von der Garnitur.

Dabei bezeichnet Kupplung jeweils den an einem freien Kabelende vorgesehenen und Gegenstück den dazugehörigen, am Gehäuse vorgesehenen Teil einer lösbaren elektrischen Verbindung, unabhängig davon, welcher dieser Teile Kontaktstifte und welcher die diesen zugeordneten Kontaktbuchsen bzw. den Stiften und Buchsen entsprechende Kontaktteile andere Art trägt. Brechkupplung bezeichnet eine Kupplung, die am Gegenstück einrastet und durch Aufbrechen der Verbindung lösbar ist. Zweckmäßig sind in an sich bekannter Weise die Kontaktstifte und -buchsen bzw. entsprechende Kontaktteile anderer Art als Rastvorrichtung ausgebildet.

Im folgenden wird die Erfindung an einem Ausführungsbeispiel näher erläutert, das in der Zeichnung dargestellt ist. Es zeigt

Fig. 1 eine am Rand eines Schutzhelmes lösbar zu befestigende Hörsprechgarnitur, wobei eine Kabelkupplung in einem Abstand von ihrem Gegenstück dargestellt ist,

Fig. 2 eine teilweise Seitenansicht in Blickrichtung II in Fig. 1,

Fig. 3 eine teilweise Seitenansicht in Blickrichtung III in Fig. 1,

Fig. 4 eine der Fig. 3 entsprechende Ansicht, wobei an das Gegenstück einer Kupplung für eine separate Sprechtaste eine Blindkupplung angesetzt ist.

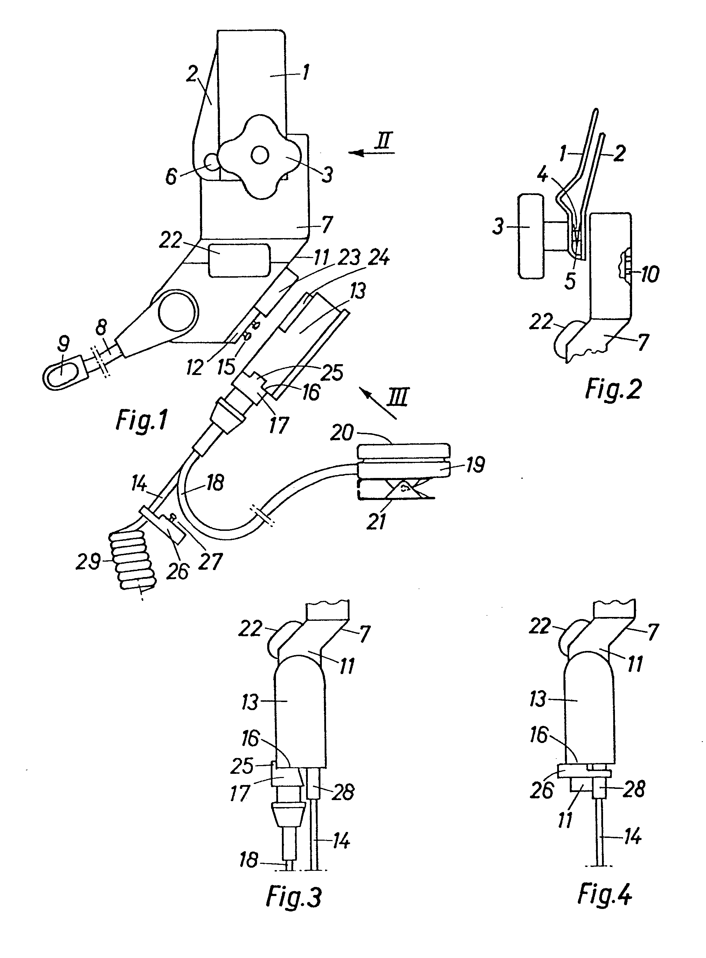

Eine Klemmvorrichtung 1—5 hat zwei gelenkig miteinander verbundene Klemmbacken 1 und 2. Die Backe 1 ist unten zur Aufnahme eines Helmes mit Randwulst gekröpft. Die Backen 1 und 2 können mittels einer mit einem Handgriff 3 verbundenen (nicht dargestellten) Mutter, die auf einem an der Backe 2 befestigten Gewindebolzen 4 sitzt, gegen die Kraft einer Feder 5 zusammengedrückt werden. Diese Klemmvorrichtung 1—5 ist um ein selbsthemmendes Gelenk 6 drehbar mit einem flachen Gehäuse 7 verbunden, das mit einem (in Fig. 2, 3 und 4 nicht dargestellten) unelastisch biegsamen Schalleiter 8 ausgerüstet ist, der am freien Ende eine Einspracheöffnung 9 hat. Das Gehäuse 7 hat an seiner in Gebrauchslage dem Ohr der den Helm mit der Garnitur tragenden Person zugewandten Seite Schallaustrittsöffnungen 10 für einen im Gehäuse untergebrachten, (nicht dargestellten) elektroakustischen Wandler. Dieser Wandler kann ein Hörer sein, wobei der Schalleiter 8 zu einem im Gehäuse 7 untergebrachten Mikrofon führt, oder er kann ein sowohl zur Schallaufnahme als auch zur Schallwiedergabe dienender Wandler sein, wobei im Gehäuse 7 eine akustische Verbindung vom Schalleiter 8 zum Wandler führt.

Der untere Teil 11 der hinteren Schmalseite des Gehäuses 7 verläuft in einem Winkel von z. B. 50° zur Vertikalen schräg abwärts nach vorn. An diesem Teil ist ein Gegenstück 12 für eine erste Sicherheitsbrechkupplung 13 gebildet. Das zugfest mit der Kupplung 13 verbundene Kabel 14 führt zu dem üblicherweise auf dem Rücken zu tragenden Teil der tragbaren Funkstation, zu der die Hörsprechgarnitur gehört. Das Kabel 14 ist an der unteren Seite der Kupplung 13 rechtwinklig zu den Kontaktstiften 15 des Gegenstückes 12 und den (nicht dargestellten) Kontaktbuchsen der Kupplung 13 herausgeführt, und daneben ist an der Kupplung 13 ein Gegenstück 16 für eine zweite Sicherheitsbrechkupplung 17 gebildet. Die Anschlußkabeldurchführung und die (nicht dargestellten) Kontaktstifte der Kupplung 17 sowie die (nicht dargestellten) Kontaktbuchsen ihres Gegenstückes 16 verlaufen rechtwinklig zu den Kontaktstiften 15 und -buchsen der ersten Kupplung 13 und deren Gegenstück 12. Das zugfest mit der zweiten Kupplung 17 verbundene Kabel 18 führt zu einer separaten Sprechtaste 19, die eine große Tastfläche 20 hat und mittels einer Klammer (Clip) 21 an einer auch unter erschwerten Bedingungen erreichbaren Stelle der Kleidung anzubringen ist, an der sie z. B. auch mit der Faust oder dem Unterarm betätigt werden kann, und zwar auch durch einen darüber getragenen Schutzanzug (Vollschutzkleidung) hindurch. Die Sprechtaste 19 kann z. B. nach Art des im deutschen Gebrauchsmuster 7 911 780 beschriebenen Schaltgeräts ausgeführt sein. Eine zweite Sprechtaste mit großer Tastfläche 22 ist am Gehäuse 7 angeordnet, so daß sie mit und ohne Atemschutz auch abwechselnd mit der separaten Sprechtaste 19 benutzt werden kann, solange keine den Kopf und den Helm umschließende Vollschutzkleidung getragen wird.

Um das Ansetzen jeder der Kupplungen 13 und 17 an ihr Gegenstück 12 bzw. 16 zu erleichtern und zu beschleunigen, hat ein U-förmiger Umfangsteil des Gegenstückes 12 der ersten Kupplung 13 einen vorstehenden Rand 23 und die Kupplung 13 eine diesem Rand angepaßte Stufe 24. Der Rand 23 steht mindestens so weit vor, wie die Kontaktstifte 15. Entsprechend hat die zweite Kupplung 17 einen vorstehenden Randteil 25, der, wenn diese Kupplung 17 mit ihrem Gegenstück 16 gekuppelt ist, an einer Längsseite der ersten Kupplung 13 anliegt. Auf diese Weise sind Führungen gebildet, die das Zusammenfügen jeder Kupplung mit ihrem Gegenstück erleichtern. Das ist zum schnellen Zusammenfügen und dann wichtig, wenn Handschuhe getragen werden.

Um eine Verunreinigung der Kontaktbuchsen des Gegenstückes 16 der zweiten Kupplung 17 zu vermeiden, wenn die Garnitur ohne die separate Sprechtaste 19 benutzt wird, die Kupplung 17 also nicht angekuppelt ist, ist eine Blindkupplung 26 vorgesehen. Diese besteht aus einer Platte mit zwei blinden Kontaktstiften 27. Die Platte hat eine Bohrung, durch die das Anschlußkabel 14 der Garnitur hindurchgeht und die dem Knickschutz 28 dieses Kabels 14 angepaßt ist. Dadurch ist die Lage der Blindkupplung 26, wenn sie an ihr Gegenstück 16 an der ersten Kupplung 13 herangeschoben wird, bereits so weit vorbestimmt, daß sie leicht in die richtige Lage gebracht und an ihr Gegenstück 16 gesteckt werden kann. Das Kabel 14 ist in einem Abstand von der Kupplung 13 zweckmäßig als Spiralkabel 29 ausgeführt. Dabei kann die Blindkupplung 26 sich nur innerhalb dieses Abstandes von der ersten Kupplung 13 entfernen.

Die beschriebene Anordnung der Kupplungen ermöglicht es z. B. einem Feuerwehrmann, die Einsatzbereitschaft rasch allein zu erstellen, indem als eine erste Einheit der Helm mit angeklemmtem Gehäuse 7 ohne die erste Kupplung 13 und als eine zweite Einheit der auf dem Rücken zu tragende Teil der Funkstation, an der das Kabel 14 befestigt ist, und die separate Sprechtaste 19 bereitgehalten wird, wobei die zweite Kupplung 17 an der ersten 13 steckt (falls die zweite Sprechtaste verwendet werden soll). Dann braucht nur der Helm aufgesetzt, der auf dem Rücken zu tragende Teil auf den Rücken genommen, die separate Sprechtaste 19 an der gewünschten Stelle der Kleidung angeklemmt und die erste Kupplung 13 an ihr Gegenstück 12 am Gehäuse 7 gesteckt zu werden. Dabei behindert das Anlegen der einen Einheit das Anlegen der anderen nicht. Erforderlichenfalls kann ein Schutzanzug, der auch den Kopf mit dem Helm umschließt (Vollschutzkleidung), angezogen werden, wobei die separate Sprechtaste 19 mit ihrer großen Tastfläche 20 durch den Schutzanzug hindurch betätigbar bleibt.

Wird kein Schutzanzug getragen, so verläuft das Kabel 14 und gegebenenfalls auch das Kabel 18 unvermeidlich wenigstens teilweise an der Außenseite der Kleidung. Bleibt die die Garnitur benutzende Person mit dem Kabel 14 an einem Hindernis hängen, so löst sich die Brechkupplung 13 von selbst, sobald der auf das Kabel 14 ausgeübte Zug ausreicht. Dabei hat sowohl ein nach unten als auch ein nach hinten wirkender Zug auf das Kabel 14 infolge der schrägen Anordnung der Kupplung 13 eine diese um ihr oberes Ende zu drehen bestrebte Komponente zum Lösen der Brechkupplung 13. Selbstverständlich kann die Brechkupplung 13 auch von Hand gelöst oder zu diesem Zweck am Kabel 14 (an dessen geraden Teil) nach unten und/oder hinten gezogen werden. Das beim Lösen der Kupplung 13 auch die Verbindung der separaten Sprechtaste 19 mit der Garnitur gelöst wird, ist nicht nachteilig, weil die Funksprechverbindung beim Lösen der Kupplung 13 sowieso ausfällt. Andererseits ermöglicht die Sprechtaste 22, wenn die zweite Kupplung 17 allein gelöst wird, die Aufrechterhaltung des Funksprechverkehrs. Der Verlauf des Kabels 18 ist weitgehend durch den Ort der separaten Sprechtaste 19, die bequem erreichbar und eventuell auch mit dem Unterarm betätigbar sein soll, bestimmt. Dagegen kann der Verlauf des Kabels 14 ohne derartige Einschränkung so gewählt werden, daß das Risiko, mit dem Kabel 14 hängen zu bleiben, möglichst klein ist. Daher ist das Risiko, mit dem Kabel 18 hängen zu bleiben größer. Die beschriebene Garnitur mit der »Huckepack«-Anordnung der beiden Kupplungen trägt dem Rechnung, weil nach einem Lösen der Kupplung 17 noch die Sprechtaste 22 zur Verfügung steht.

Die schräge Anordnung der ersten Kupplung 13 und ihres Gegenstückes 12 hat auch den Vorteil, daß die erste Kupplung 13 in einer anatomisch günstigen Bewegungsrichtung einer Hand der Person, welche die Garnitur am Helm trägt, an das Gegenstück 12 zu drücken ist, wobei die andere Hand in einer ebenfalls anatomisch günstigen Richtung das Gehäuse 7 unterstützen kann. Das gilt entsprechend auch für das Lösen dieser Kupplung 13.

## Patentansprüche

1. An einem Schutzhelm zu tragende Hörsprechgarnitur mit einem am Helmrand befestigbaren, flachen Wandlergehäuse (7), das mit einem am freien Ende eine Einspracheöffnung (9) aufweisenden Schalleiter (8) ausgerüstet ist, und an seiner in Gebrauchslage dem Ohr der den Helm tragenden Person zugewandten Seite Schallaustrittsöffnungen (10) hat, sowie mit einer lösbaren Kupplung (13), dadurch gekennzeichnet, daß die Kupplung eine als Sicherheitsbrechkupplung ausgeführte, elektrische Kupplung (13) für das Anschlußkabel (14) der Garnitur ist, das Gegenstück (12) der Kupplung (13) an einer in der Gebrauchslage hinteren, schräg abwärts nach vorn verlaufenden Schmalseite (11) des Wandlergehäuses (7) angeordnet ist, das an einer am Helmrand festzuklemmenden Klemmvorrichtung (1) angelenkt ist, und das Anschlußkabel (14) an der unteren Seite der Kupplung (13) wenigstens annähernd rechtwinklig zu deren Kontaktbuchsen oder -stiften herausgeführt ist, so daß die Kupplung (13) sich bei einem abwärts und/oder rückwärts auf das Anschlußkabel (14) ausgeübten übermäßigen Zug selbsttätig von dem an den Helm geklemmten Wandlergehäuse (7) löst, und daß die Kupplung (13) oder deren Gegenstück (12) einen parallel zu ihren Kontaktstiften (15) mindestens so weit wie diese vorstehenden Führungsteil (23) hat, dem eine Gegenfläche (24) am Gegenstück (12) bzw. an der Kupplung (13) zugeordnet ist.

2. Garnitur nach Anspruch 1, dadurch gekennzeichnet, daß neben der Stelle, an der das Anschlußkabel (14) der Garnitur aus der Kupplung (13) herausgeführt ist, ein Gegenstück (16) für eine zweite Sicherheitsbrechkupplung (17) für das Anschlußkabel (18) einer an der Kleidung zu tragenden Sprechtaste (19) gebildet ist, daß die Kontaktstifte oder -buchsen und die Kabeldurchführung der zweiten Kupplung (17) wenigstens annähernd rechtwinklig zu den Kontaktstiften oder -buchsen der ersten Kupplung (13) verlaufen, und daß die zweite Kupplung (17) oder deren Gegenstück (16) einen parallel zu ihren Kontaktstiften mindestens so weit wie diese vorstehenden Führungsteil (25) hat, dem eine Gegenfläche an der zweiten Kupplung (17) zugeordnet ist.

3. Garnitur nach Anspruch 1 oder 2, dadurch gekennzeichnet, daß eine weitere Sprechtaste (22) am Gehäuse (7) vorgesehen ist.

4. Garnitur nach einem der Ansprüche 1, 2 und 3, dadurch gekennzeichnet, daß ein U-förmig verlaufender Teil (23) des Randes des Gegenstückes (12) der ersten Kupplung (13) als Führungsteil vorsteht, und die Gegenfläche durch eine Stufe (24) der Kupplung (13) gebildet ist.

5. Garnitur nach einem der Ansprüche 2, 3 und 4, dadurch gekennzeichnet, daß ein Randteil (25) der zweiten Kupplung (17) als Führungsteil vorsteht, und ein Teil einer Längsseite der ersten Kupplung (13) die Gegenfläche bildet.

6. Garnitur nach einem der Ansprüche 2 bis 5, dadurch gekennzeichnet, daß für das Gegenstück (16) der zweiten Kupplung (17) eine Blindkupplung (26) vorgesehen ist, die aus einer Blindkontaktstifte (27) oder -buchsen tragenden Platte besteht, die eine Bohrung aufweist, durch die das Anschlußkabel (14) der Garnitur hindurchgeht, wobei der Abstand der Kontaktstifte (27) oder -buchsen von der Bohrung gleich dem Abstand ist, den die zugehörigen Gegenkontakte an der unteren Seite des ersten Kupplungsteiles (13) von der Durchführung dieses Kabels (14) haben.

7. Garnitur nach Anspruch 6, dadurch gekennzeichnet, daß das Anschlußkabel der Garnitur unmittelbar am ersten Kupplungsteil gerade, in einem Abstand davon als Spiralkabel (29) ausgeführt und die Blindkupplung (26) am geraden Teil angeordnet ist.

## Claims

1. A transmitter-receiver set to be worn on a protective helmet, having a flat transducer housing (7) which is fastenable to the edge of the helmet and which is equipped with a sound conductor (8) having a speak-in aperture (9) at the free end, and has sound exit apertures (10) at its side facing, in the position of use, the ear of the person wearing the helmet, as well as with a releasable coupling (13), characterised in that the coupling is an electrical coupling (13), designed as a safety breaking coupling, for the connecting cable (14) of the set, the counterpart (12) of the coupling (13) is arranged on a narrow side (11), which is to the rear in the position of use and which extends obliquely downwards and forwards, of the transformer housing (7) which is hinged to a clamping device (1) that is to be clamped firmly to the edge of the helmet, and the connecting cable (14) is conducted out at the lower side of the coupling (13) at least approximately at right angles to the contact bushes or pins thereof, so that the coupling (13), upon an excessive pull exerted downwardly and/or rearwardly on the connecting cable (14), automatically detaches itself from the transducer housing (7) clamped to the helmet, and in that the coupling (13) or the counterpart (12) thereof has a guide part (23) which protrudes parallel to its contact pins (15) at least as far as these and with which a countersurface (24) on the counterpart (12) or on the coupling (13) respectively is associated.

2. A set according to claim 1, characterised in that formed, beside the point at which the connecting cable (14) of the set is conducted out of the coupling (13), is a counterpart (16) for a second safety breaking coupling (17) for the connecting cable (18) of a speaking key (19) that is to be worn on the clothing, in that the contact pins or bushes and the cable leadin of the second coupling (17) extend at least approximately at right angles to the contact pins or bushes of the first coupling (13), and in that the second coupling (17) or the counterpart (16) thereof has a guide part (25) which protrudes parallel to its contact pins at least as far as these and with which a countersurface on the second coupling (17) is associated.

3. A set according to claim 1 or 2, characterised in that a further speaking key (22) is provided on the housing (7).

4. A set according to one of claims 1, 2 and 3, characterised in that a part (23), extending in a U-shaped manner, of the edge of the counterpart (12) of the first coupling (13) protrudes as guide part, and the countersurface is formed by a step (24) of the coupling (13).

5. A set according to one of claims 2, 3 and 4, characterised in that an edge part (25) of the second coupling (17) protrudes as guide part, and a part of a longitudinal side of the first coupling (13) forms the countersurface.

6. A set according to one of claims 2 to 5, characterised in that provided for the counterpart (16) of the second coupling (17) is a blind coupling (26) which consists of a plate which bears blind contact pins (27) or bushes and which has a bore through which the connecting cable (14) of the set passes, in which respect the distance of the contact pins (27) or bushes from the bore is equal to the distance which the associated cooperating contacts on the lower side of the first coupling part (13) have from the lead-in of this cable (14).

7. A set according to claim 6, characterised in that the connecting cable of the set directly on the first coupling part is straight, at a spacing therefrom is designed as a spiral cable (29) and the blind coupling (26) is arranged on the straight part.

## Revendications

1. Ensemble microphone-écouteur, à fixer sur un casque protecteur, comportant un boîtier plat (7) de transducteur capable d'être fixé au bord du casque et un connecteur démontable (13), lequel boîtier est équipé d'un conducteur de son (8) présentant à son extrémité libre une ouverture (9) pour la réception de la parole et possède des ouvertures de sortie de son (10) sur son côté qui, en position d'utilisation, est tourné vers l'oreille de la personne portant le casque, caractérisé en ce que le connecteur est un connecteur électrique (13), agencé en connecteur à rupture de sécurité, pour le câble de raccordement (14) de l'ensemble, en ce que la contre-pièce (12) du connecteur (13) est disposée sur une face étroite (11), située à l'arrière en position d'utilisation et dirigée obliquement vers le bas d'arrière en avant, du boîtier de transducteur (7) qui est articulé à un dispositif de serrage (1) à pincer sur le bord du casque et en ce que le câble de raccordement (14) sort à la partie inférieure du connecteur (13), au moins à peu près perpendiculairement à ses douilles ou fiches de contact, de telle sorte que le connecteur (13) se détache automatiquement du boîtier de transducteur (7) pincé sur le casque, dans le cas où une traction excessive est exercée vers le bas et/ou l'arrière sur le câble de raccordement (14), le connecteur (13) ou sa contre-pièce possédant un élément de guidage (23) qui fait saillie parallèlement à ses fiches de contact (15) au moins aussi loin que celles-ci et auquel est associée une contre-surface (24) sur la contre-pièce (12) ou sur le connecteur (13).

2. Ensemble selon la revendication 1 caractérisé en ce que, à côté de l'endroit où le câble de raccordement (14) de l'ensemble sort du connecteur (13), il comporte une contre-pièce (16) appartenant à un deuxième connecteur à rupture de sécurité (17) pour le câble de raccordement (18) d'une touche de parole (19) à porter sur le vêtement, en ce que les fiches ou douilles de contact et le passage de câble du deuxième connecteur (17) sont disposés au moins à peu près perpendiculairement aux fiches ou douilles de contact du premier connecteur (13) et en ce que le deuxième connecteur (17) ou sa contre-pièce (16) possède un élément de guidage (25) qui fait saillie parallèlement à ses fiches de contact au moins aussi loin que celles-ci et auquel est associée une contre-surface sur le deuxième connecteur (17).

3. Ensemble selon la revendication 1 ou 2, caractérisé en ce qu'une autre touche de parole (22) est prévue sur boîtier (7).

4. Ensemble selon l'une des revendications 1, 2 et 3, caractérisé en ce qu'un élément un U (23) fait saillie en tant qu'élément de guidage sur le bord de la contre-pièce (12) du premier connecteur (13) et en ce que la contre-surface est constituée par un gradin (24) du connecteur (13).

5. Ensemble selon l'une des revendications 2, 3 et 4, caractérisé en ce qu'un élément (25) fait saillie en tant qu'élément de guidage sur le bord du deuxième conecteur (17) et en ce qu'une partie d'une face longitudinale du premier connecteur (13) constitue la contre-surface.

6. Ensemble selon l'une quelconque des revendications 2 à 5, caractérisé en ce que, pour la contrepièce (16) du deuxième connecteur (17), il est prévu un connecteur borgne (26) comportant une plaque qui porte des fiches (27) ou douilles de contact borgnes et qui possède un trou traversé par le câble de raccordement (14) de l'ensemble, la distance entre les fiches (27) ou douilles de contact et le trou étant égale à la distance que présentent les contre-contacts correspondants situés sur la face inférieure du premier élément de connecteur (13) par rapport au passage dudit câble (14).

7. Ensemble selon la revendication 6, caractérisé en ce que le câble de raccordement de l'ensemble est droit directement contre le premier élément de connecteur, puis a la forme d'un câble hélicoïdal (29), à distance de cet élément, et en ce que le connecteur borgne (26) est disposé sur la partie droite.

Fig.1

Fig.2

Fig.3

Fig.4